# EUROPEAN PATENT SPECIFICATION

(11) **EP 1 435 194 B1**
(45) Date of publication and mention of the grant of the patent: **08.08.2007**
(21) Application number: 03256599.6
(22) Date of filing: 20.10.2003
(51) Int. Cl.: A01D 34/416, A01G 3/06, A01D 34/84

(54) **Trimmer**
Fadenschneider
Tondeuse à filament

(30) Priority: 04.11.2002 GB 0225685
(43) Date of publication of application: 07.07.2004
(73) Proprietor: Husqvarna UK Limited, County Durham, DL5 6UP (GB)
(72) Inventor: Smith, Ian Zetterstrom, North Yorkshire YO7 2LJ (GB)
(74) Representative: Pratt, David Martin

(56) References cited:
- EP-A- 0 296 789
- EP-A- 0 976 313
- GB-A- 747 292
- US-A- 2 939 262
- US-E- R E21 274

## Description

This invention relates to a grass trimming device which is capable of being switched between at least two alternative configurations which are suitable for grass trimming and edge trimming respectively.

A known grass trimming device (trimmer) comprises a cutting head mounted at one end of a shaft, an operator handle being positioned at the other end of the shaft. The cutting head includes a cutter constituted by a rotatable blade or a rotatable flexible cutting line. The cutting head can be moved relative to the shaft, to position the cutter generally horizontal for grass trimming and generally vertical for edge trimming. A small diameter wheel or roller, typically rotatably mounted in (or hanging from) the housing of the cutting head, may be provided for rolling the trimmer along a lawn edge when the trimmer is in the edging mode. Unfortunately, the wheels or rollers of known trimmers are so small that negotiation of uneven lawn surfaces or riding over obstacles such as twigs and stones is difficult, particularly if the user employs single-handed control of the trimmer. A trimmer of this type can be operated using two hands, though difficulties can still arise in negotiating uneven lawn surfaces. Thus, although two-handed operation of such a trimmer is easier than one-handed operation - partly because it is easier to push the trimmer using two hands, and partly because one hand can be used to lift the "front" of the trimmer whilst the other hand is used to push the trimmer - it is still difficult to control the movement of the trimmer sufficiently accurately to ensure a good edging performance.

Known trimmers are relatively easy to operate when in the trimming configuration. However, when in the edging configuration, the user must stand at right-angles to the edge of a lawn being trimmed, and move sideways along that edge as trimming progresses. This is disadvantageous, in that it is difficult to align the cutter accurately with the edge of the lawn (owing to the eye of the user not being in alignment with the lawn edge), and this can lead to a poor edging performance. This poor edging performance is exacerbated by difficulties caused by negotiation of uneven lawn surfaces or riding over obstacles.

EP-A-976 313 describes a trimmer provided with a wheel for guiding the trimmer for edging purposes. The wheel is positioned inside the guard which surrounds the cutter of the trimmer, and so has the disadvantage that it is subjected to grass cuttings and soil thrown up by the cutter during edging operations, thereby requiring frequent cleaning.

The aim of the invention is to provide a trimmer having improved edging capabilities.

The present invention provides a trimmer comprising a cutting head having a guard housing a cutter means, a shaft for supporting the cutting head, roller means rotatably mounted with respect to the cutting head, and drive means for driving the cutter means, the cutting head being connected to the shaft by connection means permitting the cutting head to be positioned with its cutter means either substantially horizontal or substantially vertical, the roller means being sized to contact the ground when the cutter means is substantially vertical and to circumscribe the axis of the drive means, the arrangement being such that the cutter means extends beyond the circumference of the roller means, characterised in that the roller means is located outside the guard on the drive means side thereof.

In a preferred embodiment, the connection means is constituted by a rotatable joint, and preferably the rotatable joint is constituted by a ball-and-socket joint having a socket and a ball. In this case, the ball may be fixed to the cutting head by a neck portion, and the socket may be defined by a generally spherical socket portion provided at one end of the shaft.

Advantageously, the roller means is a wheel. In a preferred embodiment, the wheel is detachably mounted on the connection means. Advantageously, the wheel is detachably mounted on the neck portion.

Preferably, the wheel is formed with a break in its circumferential region, portions of said region adjacent to the break being formed with complementary, detachably-engagable connections. In this case, the wheel may be of two-part construction having first and second generally semi-circular wheel members, first ends of which are pivotally connected together, the second ends of the wheel members being formed with complementary, detachably-engagable connectors.

Preferably, the inner circumferential region of the wall and the neck portion are formed with complementary, interengagable location means. In this case, the wheel may be formed with an inwardly-projecting flange on its inner circumferential region, the flange being engagable within a complementary recess formed in the neck portion.

Advantageously, the drive means comprises a motor and a drive shaft, the drive shaft passing through the roller means.

Preferably, the cutter means is rotatable, and the drive engagement between the motor and the cutter means is a rotatable drive engagement. The motor may be an electric motor.

In a preferred embodiment, a rotatable cutter line constitutes the cutter means.

Advantageously, the axis of rotation of the roller means is substantially coincident with the axis of rotation of the cutter means. Advantageously, the radius of the roller means is of the order of, but slightly less than, the effective radius of the cutter means.

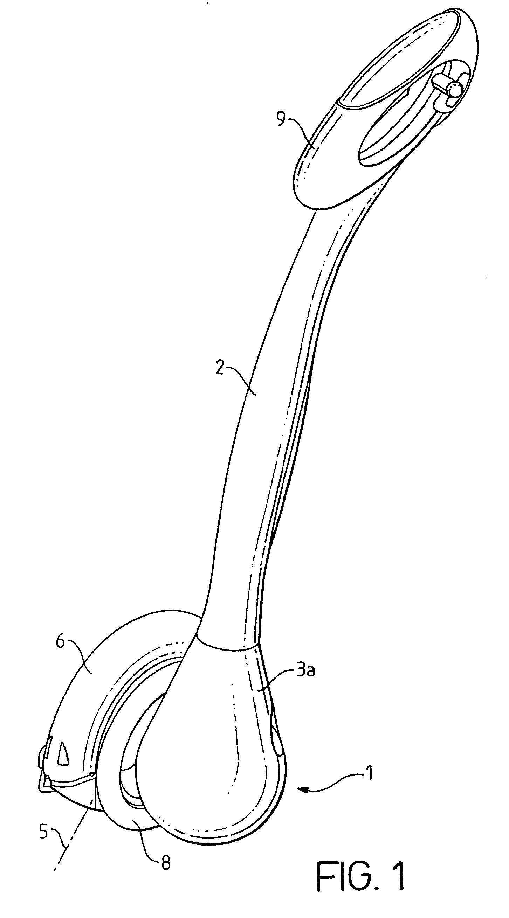

A trimmer constructed in accordance with the invention will now be described, by way of example, with reference to the drawings, in which:-
Figure 1 is perspective view of the trimmer;
Figure 2 is a side elevation of the trimmer in edging mode;
Figure 3 is a front elevation of the trimmer in edging mode;
Figure 4 is a side elevation of the trimmer in trimming mode;
Figure 5 is a front elevation of the trimmer in trimming mode;
Figure 6 is a perspective view of a wheel forming part of the trimmer, the wheel being shown separate from the trimmer; and
Figure 7 is a perspective view showing how the wheel is detachably fixed to the trimmer.

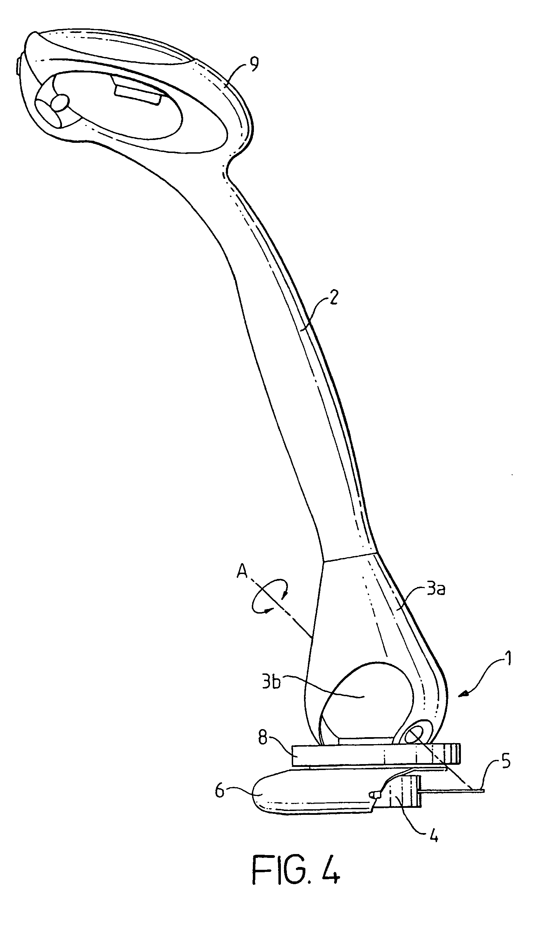

As shown in the drawings, the trimmer comprises a cutting head 1 which is connected to a shaft 2 by means of a ball-and-socket joint 3. The joint 3 is constituted by a housing 3a, which is integrally formed with the shaft 2, and a ball 3b which is fixed to the cutting head 1 by a neck portion 3c. The housing 3a defines a generally spherical socket which complements the shape of the ball 3b. The shaft 2 and the housing 3a are made of a plastics material such as ABS or polypropylene, and the ball 3b is made of a plastics material such as ABS or polypropylene. The cutting head 1 includes a rotatable hub 4 which houses a coiled up flexible cutter line (only the free end of portion 5 of which can be seen in the drawings). The cutter line 5 exits the hub 4 via an aperture 4a, and can be fed out (in known manner) as the cutter line wears. The axis A of rotation of the joint 3 (see Figure 4) lies at an angle of substantially 35.5° to the plane of rotation of the cutter line 5.

The cutting head 1 is also provided with a guard 6 made of a plastics material such as ABS or polypropylene. The guard 6 partially surrounds the hub 4 and the cutter line 5 in such a manner that the cutter line has an effective cutting range which extends somewhat less than 180°. The hub 4 is rotatably driven by an electric motor (only the output shaft 7 of which can be seen), the motor being housed within the ball 3b. A wheel 8 made of a plastics material such as ABS or polypropylene is mounted between the guard 6 and the housing 3a, the wheel being rotatable relative to the guard about the axis of the motor shaft 7, and having a radius that is slightly less than the effective radius of the cutter line 5. A hand grip 9 is provided at the free (upper) end of the handle 2.

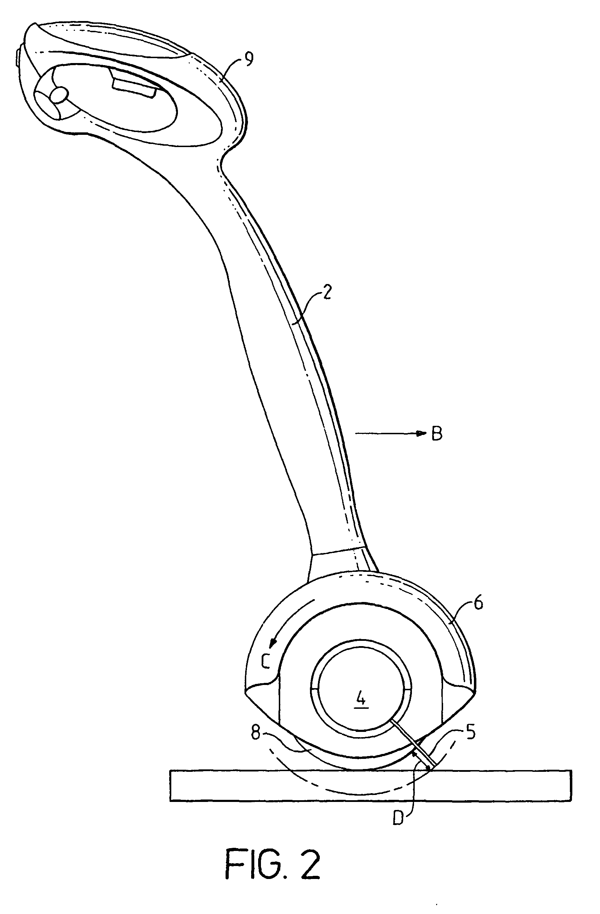

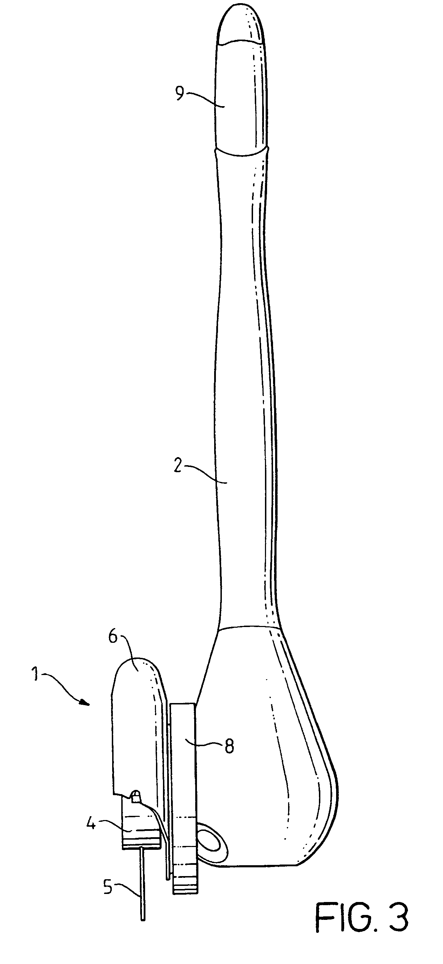

Figures 2 and 3 show the trimmer 1 in the edging position, that is to say with the cutting head 1 positioned so that the cutter line 5 is generally vertical. In this position, as shown in Figure 2, the rim of the wheel 8 can be positioned on a lawn adjacent to the edge thereof, so that the cutter line 5 is positioned for an edging operation. The trimmer can then be advanced along the edge of the lawn to carry out the edging operation. As shown in Figure 2, the distance between the effective radius of the cutter line 5 and the radius of the wheel 8 defines the depth of cut (cutting swathe) which can be effected with the trimmer in the edging position. In Figure 2, arrow B indicates the edging direction (that is to say the direction in which the trimmer is moved during edging), arrow C indicates the cutting direction (that is to say the direction of rotation of the cutter line 5), and double-headed arrow D indicates the depth of cut (the cutting swathe) of the cutter line 5.

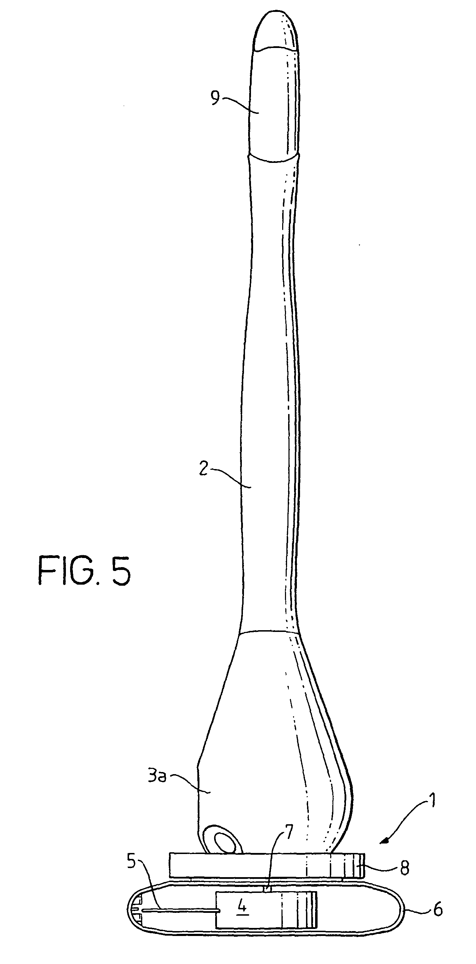

In order to change the trimmer from its edging mode to its trimming mode, it is necessary only to rotate the cutting head 1 relative to the shaft 2, through either 120° in one direction, or 240° in the other direction. Figures 4 and 5 show the trimmer with the cutting head 1 in the trimming position, that is to say with the cutter line 5 generally horizontal.

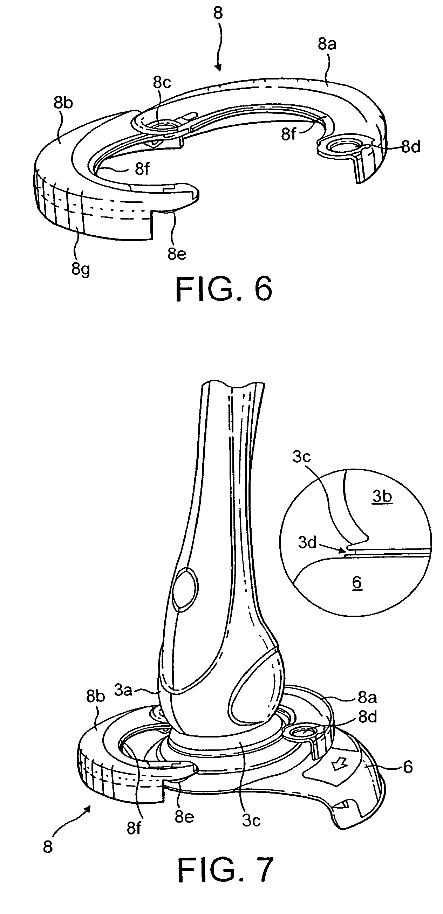

Figure 6 shows the wheel 8 separate from the trimmer, the wheel being constituted by two generally semi-circular members 8a and 8b, and Figure 7 shows how the wheel is attached to, and detached from, the trimmer. First ends of the wheel members 8a and 8b are pivotally connected by means of a pivot 8c, the other ends of the wheel members being provided respectively with a recess 8d and a complementary projection 8e. The inner circumferential region of the wheel 8 is formed with an inwardly-projecting flange 8f.

In order to attach the wheel 8 to the trimmer, the wheel is presented to the trimmer in the opened-up configuration shown in Figure 6. The inner circumferential region of the wheel 8 is then placed around the trimmer between the housing 3a and the guard 6. The flange 8f is slotted into a complementary recess 3d (see the enlarged view of Figure 7) formed in the neck portion 3c. The wheel 8 is then closed by snap engagement of the recess 8d and the projection 8e.

As shown in Figures 6 and 7, the rim 8g of the wheel 8 is formed with ribs to improve gripping of contact of the wheel with the ground.

One advantage of the 120° or 240° rotational angle necessary to convert between the two modes is that, in the edging mode, the shaft 2 is generally aligned with the edge of the lawn, so that the user can carry out an edging operation when positioned behind the cutting head 1 and moving forwards (or backwards) along the edge of the lawn. This enables the user to line up the cutter line 5 with the edge of the lawn, because the user's eye can be positioned substantially in the plane of the lawn edge. This is to be contrasted with known trimmers, in which the user faces the edge of the lawn when the trimmer is in the edging position, and has to move sideways parallel to the lawn edge to carry out an edging operation. Clearly, in this position, the user cannot line up the cutter line accurately with the lawn edge. A further advantage of the trimmer described above is that, with the trimmer in the edging configuration as shown in Figure 2, the direction of rotation of the cutter line 5 is such as to throw cut grass and debris directly away from the user, that is to say at 180° to the user. This is because the user is positioned "behind" the cutting head. This is to be contrasted with known trimmer/edgers, in which the user stands at substantially 90° to the edge of the lawn (and hence to the plane of rotation of the cutter). Accordingly, there is less chance of the user of the trimmer of the present invention being hit by flying debris than with known devices.

An advantage of this trimmer is that the wheel 8 has a relatively large diameter. The trimmer can, therefore, handle uneven lawn surfaces rather better than known wheeled trimmers which typically have a small wheel hanging off the front of the cutting head. This is particularly the case where the trimmer is operated using only one hand. Thus, because of the large diameter wheel, the trimmer described above can be operated using only one hand, whilst negotiating uneven lawn surfaces and ensuring an accurate edging action.

As the wheel 8 is positioned between the guard 6 and the housing 3a, it is shielded from grass cuttings and soil thrown up by the cutter line 5 when the trimmer is used in the edging mode. Consequently, the wheel 8 needs to be cleaned substantially less often than a known type of trimmer which has a wheel positioned within its guard adjacent to the cutter.

Another advantage of positioning the wheel 8 outside the guard 6 is that it contacts the ground away from the immediate edge of a lawn, and so is less likely to fall off the edge of a lawn during an edging operation, particularly where the lawn edge is not straight.

Yet another advantage of the wheel 8 is that it is easily detachable from the trimmer so that, when cleaning is required, the wheel can easily be removed and cleaned, for example with a stiff brush.

A further advantage of the detachable wheel 8 is that the trimmer can be provided in a partially-assembled state, thus reducing packaging size and cost, and transportation and storage costs.

Another advantage of the trimmer described above is that the joint about which the cutting head 1 rotates is low down, thereby reducing the difference in the height of the hand grip 9 when the trimmer is in the edging and trimming modes.

It will be apparent that modifications could be made to the trimmer described above. For example, the wheel 8 could be made of a flexible material, and be formed with a break in its circumferential rim region. Those portions of the circumferential rim region would then be formed with complementary, detachably-engagable connectors such as the recess 8d and the projection 8e of the arrangement shown in Figures 6 and 7. This modified form of wheel would be attachable to / detachable from, the trimmer in an analogous manner to that described above with reference to Figures 6 and 7.

## Claims

1. A trimmer comprising a cutting head (1) having a guard (6) housing a cutter means (5), a shaft (2) for supporting the cutting head, roller means (8) rotatably mounted with respect to the cutting head, and drive means for driving the cutter means, the cutting head being connected to the shaft by connection means (3) permitting the cutting head to be positioned with its cutter means either substantially horizontal or substantially vertical, the roller means being sized to contact the ground when the cutter means is substantially vertical and to circumscribe the axis of the drive means, the arrangement being such that the cutter means extends beyond the circumference of the roller means, **characterised in that** the roller means is located outside the guard on the drive means side thereof.

2. A trimmer as claimed in claim 1, wherein the connection means is constituted by a rotatable joint (3).

3. A trimmer as claimed in claim 2, wherein the rotatable joint is constituted by a ball-and-socket joint (3) having a socket (3a) and a ball (3b).

4. A trimmer as claimed in claim 3, wherein the ball (3b) is fixed to the cutting head (1) by a neck portion (3c), and the socket (3a) is defined by a generally spherical socket portion provided at one end of the shaft (2).

5. A trimmer as claimed in any one of claims 1 to 4, wherein the roller means is a wheel (8).

6. A trimmer as claimed in claim 5, wherein the wheel (8) is detachably mounted on the connection means (3).

7. A trimmer as claimed in claim 6 when appendant to claim 4, wherein the wheel (8) is detachably mounted on the neck portion (3c).

8. A trimmer as claimed in any one of claims 5 to 7, wherein the wheel (8) is formed with a break in its circumferential region, portions of said region adjacent to the break being formed with complementary, detachably-engagable connections.

9. A trimmer as claimed in claim 8, wherein the wheel (8) has first and second generally semi-circular wheel members (8a, 8b), first ends of which are pivotally connected (at 8c) together, the second ends of the wheel members being formed with complementary, detachably-engagable connectors (8d, 8e).

10. A trimmer as claimed in either of claims 8 and 9 when appendant to claim 7, wherein the inner circumferential region of the wheel (8) and the neck portion (3c) are formed with complementary, interengagable location means.

11. A trimmer as claimed in claim 10, wherein the wheel is formed with an inwardly-projecting flange (8f) on its inner circumferential region, the flange being engagable within a complementary recess formed in the neck portion (3c).

12. A trimmer as claimed in any one of claims 1 to 11, wherein the drive means comprises a motor and a drive shaft(7), the drive shaft passing through the roller means (8).

13. A trimmer as claimed in claim 12, wherein the cutter means (5) is rotatable, and the drive engagement between the motor and the cutter means is a rotatable drive engagement.

14. A trimmer as claimed in claim 12 or claim 13, wherein the motor is an electric motor.

15. A trimmer as claimed in claim 14 when appendant to claim 4, wherein the motor is housed within the ball (3b).

16. A trimmer as claimed in any one of claims 1 to 15, wherein a rotatable cutter line (5) constitutes the cutter means.

17. A trimmer as claimed in any one of claims 1 to 16, wherein the axis of rotation of the roller means (8) is substantially coincident with the axis of rotation of the cutter means (5).

18. A trimmer as claimed in claim 17, wherein the radius of the roller means (8) is of the order of, but slightly less than, the effective radius of the cutter means (5).

## Patentansprüche

1. Trimmervorrichtung umfassend einen Schneidkopf (1), der eine Schutzvorrichtung (6) aufweist, in die ein Schneidemittel (5) aufgenommen ist, einen Schaft (2) zum Halten des Schneidkopfes, Rollenmittel (8), die drehbar in Bezug auf den Schneidkopf angebracht sind, und Antriebsmittel zum Antreiben der Schneidemittel, wobei der Schneidkopf mit dem Schaft durch ein Verbindungsmittel (3) verbunden ist, das es erlaubt, den Schneidkopf mit seinem Schneidemittel entweder im Wesentlichen horizontal oder im Wesentlichen Vertikal auszurichten, wobei das Rollenmittel so bemessen ist, dass es den Boden berührt, wenn das Schneidemittel im wesentlichen vertikal ist, und dass es um die Achse des Antriebsmittels läuft, wobei die Anordnung so ist, dass das Schneidemittel über den Umfang des Rollenmittels hinausragt, **dadurch gekennzeichnet, dass** das Rollenmittel außerhalb der Schutzvorrichtung an der Antriebsmittelseite derselben angeordnet ist.

2. Trimmervorrichtung nach Anspruch 1, wobei das Verbindungsmittel durch ein drehbares Gelenk (3) gebildet ist.

3. Trimmervorrichtung nach Anspruch 2, wobei das drehbare Gelenk durch ein Kugelgelenk (3), das eine Lagerschale (3a) und eine Kugel (3b) aufweist, gebildet ist.

4. Trimmervorrichtung nach Anspruch 3, wobei die Kugel (3b) durch einen Halsbereich (3c) an dem Schneidkopf (1) befestigt ist und die Lagerschale (3a) durch einen im Wesentlichen kugelförmigen Sockelbereich, der an einem Ende des Schafts (2) angeordnet ist, abgegrenzt ist.

5. Trimmervorrichtung nach einem der Ansprüche 1 bis 4, wobei das Rollenmittel ein Rad (8) ist.

6. Trimmervorrichtung nach Anspruch 5, wobei das Rad (8) lösbar an dem Verbindungsmittel (3) angebracht ist.

7. Trimmervorrichtung nach Anspruch 6, wenn dieser von dem Anspruch 4 abhängig ist, wobei das Rad (8) lösbar an dem Halsbereich (3c) angebracht ist.

8. Trimmervorrichtung nach einem der Ansprüche 5 bis 7, wobei das Rad (8) mit einer Lücke an seinem Umfangsbereich geformt ist, wobei Teile von diesem Bereich, die an die Lücke angrenzen, mit komplementären lösbar in Eingriff bringbaren Verbindungen gebildet sind.

9. Trimmervorrichtung nach Anspruch 8, wobei das Rad (8) erste und zweite im Wesentlichen halbkreisförmige Radelemente (8a, 8b) aufweist, wobei erste Enden davon drehbar (bei 8c) miteinander verbunden sind und wobei die zweiten Enden der Radelemente mit komplementären lösbar in Eingriff bringbaren Verbindungselementen (8d, 8e) gebildet sind.

10. Trimmervorrichtung nach einem der Ansprüche 8 bis 9 wenn abhängig vom Anspruch 7, wobei der innere Umfangsbereich des Rads (8) und der Halsbereich (3c) mit komplementären miteinander eingreifbaren Positionsmitteln gebildet sind.

11. Trimmervorrichtung nach Anspruch 10, wobei das Rad mit einem nach innen ragenden Flansch (8f) an seinem Umfangsbereich gebildet ist, wobei der Flansch mit einer komplementären Vertiefung, die an dem Halsbereich (3c) gebildet ist, in Eingriff bringbar ist.

12. Trimmervorrichtung nach einem der Ansprüche 1 bis 11, wobei das Antriebsmittel einen Motor und eine Antriebswelle (7) umfasst, wobei die Antriebswelle durch das Rollenmittel (8) durchtritt.

13. Trimmervorrichtung nach Anspruch 12, wobei das Schneidemittel (5) drehbar ist und der Antriebseingriff zwischen dem Motor und dem Schneidemittel ein rotatorischer Antriebseingriff ist.

14. Trimmervorrichtung nach Anspruch 12 oder Anspruch 13, wobei der Motor ein elektrischer Motor ist.

15. Trimmervorrichtung nach Anspruch 14 wenn dieser vom Anspruch 4 abhängig ist, wobei der Motor innerhalb der Kugel (3b) angeordnet ist.

16. Trimmervorrichtung nach einem der Ansprüche 1 bis 15, wobei eine rotierbare Schneidleine (5) das Schneidemittel bildet.

17. Trimmervorrichtung nach einem der Ansprüche 1 bis 16, wobei die Drehachse des Rollenmittels (8) im Wesentlichen mit der Rotationsachse des Schneidemittels (5) zusammenfällt.

18. Trimmervorrichtung nach Anspruch 17, wobei der Radius des Rollenmittels (8) in derselben Größenordnung wie, aber ein wenig kleiner als der effektive Radius des Schneidemittels (5) ist.

## Revendications

1. Tondeuse comprenant une tête de coupe (1) munie d'une protection (6) abritant un moyen de coupe (5), un manche (2) destiné à porter la tête de coupe, un moyen de roulement (8) monté de façon à pouvoir pivoter par rapport à la tête de coupe, et un moyen d'entraînement destiné à entraîner le moyen de coupe (5), la tête de coupe étant connectée au manche (2) par un moyen de connexion (3) permettant à la tête de coupe avec son moyen de coupe d'être disposée sensiblement soit à l'horizontale soit à la verticale, le moyen de roulement étant dimensionné de façon à être en contact avec le sol lorsque le moyen de coupe est sensiblement vertical et à entourer l'axe du moyen d'entraînement, la disposition étant telle que le moyen de coupe s'étend au delà de la circonférence du moyen de roulement, **caractérisé en ce que** le moyen de roulement est placé à l'extérieur de la protection sur le côté du moyen d'entraînement de celle-ci.

2. Tondeuse selon la revendication 1, dans lequel le moyen de connexion est constitué par un joint rotatif (3).

3. Tondeuse selon la revendication 2, dans lequel le joint rotatif est constitué par un joint à rotule (3) ayant une douille (3a) et une boule (3b).

4. Tondeuse selon la revendication 3, dans lequel la boule (3b) est fixée à tête de coupe (1) par une partie de col (3c), et la douille (3a) est définie par une partie de douille de façon générale sphérique disposée à une extrémité du manche (2).

5. Tondeuse selon l'une quelconque des revendications 1 à 4, dans lequel le moyen de roulement est une roue (8).

6. Tondeuse selon la revendication 5, dans lequel la roue (8) est montée de façon amovible sur le moyen de connexion (3).

7. Tondeuse selon la revendication 6 lorsqu'elle est attachée à la revendication 4, dans lequel la roue (8) est montée de façon amovible sur la partie de col (3c).

8. Tondeuse selon l'une quelconque des revendications 5 à 7, dans lequel la roue (8) est formée avec une interruption sur sa partie circonférentielle, des zones de ladite partie adjacentes à l'interruption étant formées avec des connexions complémentaires, engagées de façon amovible.

9. Tondeuse selon la revendication 8, dans lequel la roue (8) présente un premier et un second élément de roue (8a, 8b) de forme semi-circulaire de manière générale, dont les premières extrémités sont connectées (en 8c) l'une à l'autre de façon pivotante, les secondes extrémités des éléments de roue étant formées avec des connecteurs complémentaires (8d, 8e), engagées de façon amovible.

10. Tondeuse selon l'une ou l'autre des revendications 8 et 9 lorsqu'elle est attachée à la revendication 7, dans lequel la région circonférentielle intérieure de la roue (8) et la partie de col (3c) sont formées avec des moyens de fixation complémentaires engagées réciproquement.

11. Tondeuse selon la revendication 10, dans lequel la roue (8) est formée avec une collerette faisant saillie vers l'intérieur (8f) sur sa partie circonférentielle intérieure, la collerette pouvant s'engager à l'intérieur d'un retrait complémentaire formé sur la partie de col (3c).

12. Tondeuse selon l'une quelconque des revendications 1 à 11, dans lequel le moyen d'entraînement comprend un moteur et un arbre d'entraînement (7), l'arbre d'entraînement passant à travers le moyen de roulement (8).

13. Tondeuse selon la revendication 12, dans lequel le moyen de coupe (5) est rotatif, et l'engagement d'entraînement entre le moteur et le moyen de coupe est un engagement d'entraînement rotatif.

14. Tondeuse selon la revendication 12 ou la revendication 13, dans lequel le moteur est un moteur électrique.

15. Tondeuse selon la revendication 14 lorsqu'elle est attachée à la revendication 4, dans lequel le moteur est logé à l'intérieur de la boule (3b).

16. Tondeuse selon l'une quelconque des revendications 1 à 16, dans lequel un fil de coupe rotatif (5) constitue le moyen de coupe.

17. Tondeuse selon l'une quelconque des revendications 1 à 16, dans lequel l'axe de rotation du moyen de roulement (8) coïncide substantiellement avec l'axe de rotation du moyen de coupe (5).

18. Tondeuse selon la revendication 17, dans lequel le rayon du moyen de roulement (8) est de l'ordre, mais légèrement inférieur, de celui du rayon effectif du moyen de coupe (5).
